# EUROPÄISCHE PATENTANMELDUNG

(11) **EP 1 172 576 A2**
(43) Veröffentlichungstag der Anmeldung: **16.01.2002**
(21) Anmeldenummer: 01113998.7
(22) Anmeldetag: 08.06.2001
(51) Int. Cl.: F16C 33/10

(54) **Wellenlagerung**

(30) Priorität: 13.07.2000 DE 10034123
(71) Anmelder: ROBERT BOSCH GMBH, 70442 Stuttgart (DE)
(72) Erfinder: Dornhoefer, Gerd, 71229 Leonberg (DE); Koch, Hans-Peter, 70435 Stuttgart (DE); Vogt, Andreas, 71272 Renningen (DE); Stehr, Werner, 72160 Horb-Ahldorf (DE)

(57) **Zusammenfassung**

Die Erfindung betrifft eine Wellenlagerung mit einem Gleitlager, insbesondere einem Sintergleitlager, in dessen Lagerbohrung eine Welle mit Lagerspiel geführt ist, wobei sich im Lagerspiel ein Ölfilm ausbildet und zumindest an einer Stirnseite des Lagers eine mit der Welle drehfest verbundene Anlaufscheibe in Berührungskontakt mit der Stirnseite des Lagers steht. Eine verbesserte Schmierstoffversorgung, eine reduzierte Reibung und eine verbesserte axiale Stoßdämpfung werden dadurch erreicht, dass die Anlaufscheibe in Umfangsrichtung abwechselnd mit radial von ihrer Wellenbohrung ausgehenden Wellenbergen und Wellentäler versehen ist und mit den Wellenbergen auf der zugekehrten Stirnseite des Lagers gleitet.

## Beschreibung

### Stand der Technik

Die Erfindung betrifft eine Wellenlagerung mit einem Gleitlager, insbesondere einem Sintergleitlager, in dessen Lagerbohrung eine Welle mit Lagerspiel geführt ist, wobei sich im Lagerspiel ein Ölfilm ausbildet und zumindest an einer Stirnseite des Lagers eine mit der Welle drehfest verbundene Anlaufscheibe in Berührungskontakt mit der Stirnseite des Lagers steht.

Eine derartige Wellenlagerung ist aus der DE 43 42 902 A1 bekannt. Dabei bildet die Anlaufscheibe mit der Stirnfläche des Lagers einen radial erweiternden Spalt. Die Anlaufscheibe ist aus abriebfestem Material und liegt mit einer kreisförmigen Kontaktfläche kleinen Radius an der Stirnfläche des Lagers an.
Daher ist der tribologische Kontakt zwischen der Anlaufscheibe und dem Lager ein kreisförmiger Linienkontakt mit bohrender Reibung. Die Schmierstoffversorgung der Anlaufscheibe kann nur im Moment des Anlaufes an die Stirnfläche des Lagers erfolgen. Die Anlaufscheibe hat keine hydrodynamischen Auftriebsflächen, die die Reibung verringern und die axialen Stöße werden nur durch die Elastizität des Scheibenwerkstoffes erreicht, wenn sich nicht eine Dämpfungsscheibe auf der Welle an die Anlaufscheibe anschließt.

Es ist Aufgabe der Erfindung, eine Wellenlagerung der eingangs erwähnten Art zu schaffen, bei der die Anlaufscheibe die Reibung zum Lager hin durch bessere Schmierstoffversorgung vermindert und gleichzeitig die axialen Stöße wirkungsvoll dämpft und hydrodynamische Effekte nutzt.

Diese Aufgabe wird nach der Erfindung dadurch gelöst, dass die Anlaufscheibe in Umfangsrichtung abwechselnd mit radial von ihrer Wellenbohrung ausgehenden Wellenbergen und Wellentäler versehen ist und mit den Wellenbergen auf der zugekehrten Stirnseite des Lagers gleitet.

Durch die wellige Form der Anlaufscheibe werden Erschütterungen und Stöße in axialer Richtung besser abgefangen als bei herkömmlichen Anlaufscheiben. Die Wellenberge der mit der Welle rotierenden Anlaufscheibe liegen an dem feststehenden Lager an und führen aufgrund hydrodynamischer Auftriebseffekte an diesen Berührungsstellen zu sehr geringen Reibungszahlen, insbesondere dann, wenn zusätzlich vorgesehen ist, dass die Wellenberge im Bereich ihrer Berührungskontakte mit der Stirnseite des Lagers glatt poliert sind.

Durch die spezielle Oberflächenstruktur der Anlaufscheibe im Bereich der Wellentäler und der anschließenden Wellenflanken können die Wellenberge optimal und gezielt mit Schmierstoff versorgt werden. Dazu ist insbesondere vorgesehen, dass die Anlaufscheibe auf der der Stirnseite des Lagers zugekehrten Seite im Bereich der Wellentäler und der anschließenden Wellenflanken mit Riefen versehen ist, die vom Talgrund der Wellentäler ausgehen und sich zum Umfang der Anlaufscheibe geneigt über die Wellenflanken erstrecken.

Die Einbringung der Riefen und ihre Anordnung ist dabei so vorgenommen, dass sich die Riefen im Bereich des Talgrundes der Wellentäler teilweise überlappen und mit ihren entgegen gesetzt geneigten Anfangsabschnitten im Winkel von etwa 30° zum Umfang der Anlaufscheibe stehen und mit Endabschnitten in demselben Winkel zum Umfang der Anlaufscheibe vor Erreichen der Wellenrücken enden, während die Riefen zwischen den Anfangs- und Endabschnitten mit Mittelabschnitten im Winkel von etwa 80° zum Umfang der Anlaufscheibe verlaufen. Im Querschnitt sind die Riefen V-förmig, wobei die Breite und die Tiefe in den Endabschnitten gegen Null gehen. Die sich überlappenden Anfangsabschnitte der Riefen verhindern ein ungehindertes Abfließen des Öles in radialer Richtung der Wellentäler.

Der Randbereichsübergang zwischen der Oberfläche der Anlaufscheibe und den V-förmigen Riefen ist nach einer Ausgestaltung so ausgeführt, dass die an die Kanten der Riefen anschließenden Oberflächenbereiche der Anlaufscheibe eine granulierte Oberflächenstruktur mit einer Granulatgröße < 0,2 mm aufweisen. Diese granulierte Oberflächenstruktur verhindert die Barrierewirkung der Kanten der Riefen und lässt kriechendes Öl in die Riefen eindringen. Das kriechende Öl versorgt den Anlaufbereich der Scheibe über die Riefen mit Schmierstoff. Das Abschleudern wird verlangsamt oder ganz verhindert, wenn zusätzlich vorgesehen ist, dass die Anlaufscheibe umfangsseitig durch die stirnseitige Ausnehmung des Lagers überdeckt ist. Dabei kann die stirnseitige Ausnehmung des Lagers dazu ausgenützt werden, dass die Wellenbohrung als Lagerhülse ausgebildet ist, die von einer stirnseitigen Ausnehmung des Lagers aufgenommen ist.
Das abgeschleuderte Öl gelangt dann wieder in das Lager zurück, wenn dieses aus Sintermaterial besteht. Die wellige Anlaufscheibe ist kostenidentisch herstellbar wie eine herkömmliche Anlaufscheibe.

Die Erfindung wird anhand eines in der Zeichnung dargestellten Ausführungsbeispiels näher erläutert. Es zeigen:
- Fig. 1: einen Teilschnitt im Bereich der Stirnseite des Lagers mit anliegender Anlaufscheibe einer Wellenlagerung,
- Fig. 2: in perspektivischer Ansicht die eingesetzte wellige Anlaufscheibe und
- Fig. 3: eine Teilaufsicht auf die dem Lager zugekehrte Seite der Anlaufscheibe mit den Riefen im Wellental und den anschließenden Wellenflanken.

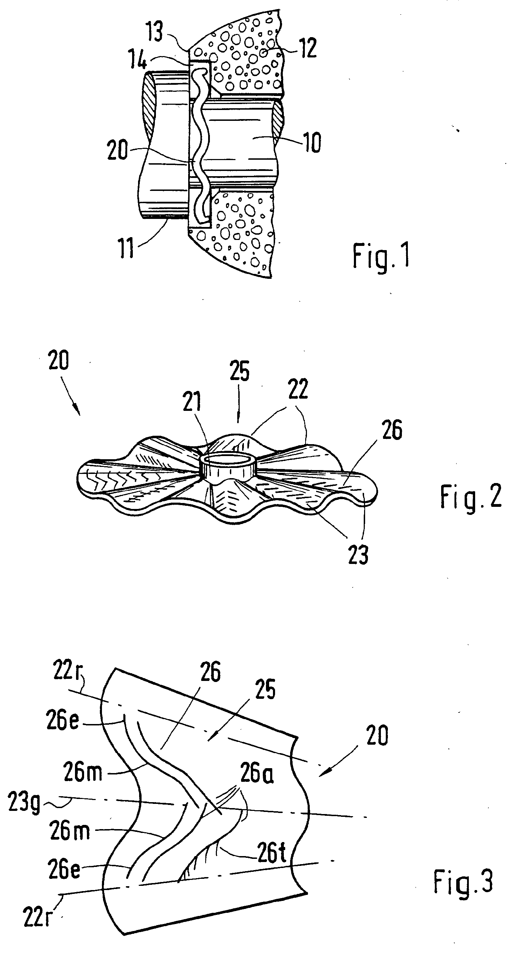

Wie der Teilschnitt nach Fig. 1 zeigt, ist eine Welle 10 in einem aus Sintermaterial bestehenden Lager 12 mit Spiel geführt. Dabei weist die Stirnseite 13 des Lagers 12 eine Ausnehmung 14 auf, die die Anlaufscheibe 20 aufnimmt und umfangsseitig überdeckt. Dabei kann die Wellenbohrung 21 der Anlaufscheibe 20 als Lagerhülse ausgebildet sein, die von dieser Ausnehmung 14 ebenfalls aufgenommen wird. Die Welle 10 weist einen Bund 11 auf, der als Abstützung für die Anlaufscheibe 20 dient. Die Anlaufscheibe 20 ist drehfest auf der Welle 10 festgelegt.

Wie die Fig. 2 zeigt, ist die Anlaufscheibe 20 in Umfangsrichtung abwechselnd mit Wellentälern 23 und Wellenbergen 22 versehen, die sich von der Lagerhülse ausgehend radial zum Umfang der Anlaufscheibe 20 erstrecken und sich entsprechend verbreitern. Die Fig. 2 zeigt in Einzelheiten die dem Lager 12 zugekehrte Seite 25 der Anlaufscheibe 20 und lässt erkennen, dass in die Wellentäler 23 und die anschließenden Wellenflanken mit Ausnahme der Wellenrücken der Wellenberge 22 Riefen 26 eingebracht sind. Die Anordnung und Ausrichtung der Riefen 26 wird anhand der Teilansicht nach Fig. 3 näher erläutert.

Die Riefen 26 gehen im Bereich des Talgrundes 23g der Wellentäler 23 mit Anfangsabschnitten 26a aus, die sich in radialer Richtung teilweise überlappen und so ein radiales Abfließen von Öl in den Wellentälern 23 verhindern. Diese Anfangsabschnitte 26a der entgegen gesetzt geneigten Riefen 26 stehen in einem Winkel von etwa 30° zum Umfang der Anlaufscheibe 20 und gehen in Mittelabschnitte 26m über, die in einem Winkel von etwa 80° zum Umfang der Anlaufscheibe 20 verlaufen. Dabei können an den Mittelabschnitten 26m der Riefen 26 auch baumartig Teilriefen 26t abzweigen. Die Riefen 26 enden in Endabschnitten 26e, die wiederum im Winkel von etwa 30° zum Umfang der Anlaufscheibe 20 stehen und in der Breite und Tiefe der Riefen 26 gegen Null gehen, so dass das Öl in den Riefen 26 gehalten bleibt und nicht radial abgeschleudert wird. Dadurch wird die Schmierstoffversorgung der Wellenrücken 22r wesentlich verbessert, die glatt poliert sind und an der Stirnseite 13 in der Ausnehmung 14 des Lagers 12 anliegen. Damit wird die Reibung wesentlich reduziert. Die wellenförmige Anlaufscheibe 20 nimmt zudem axiale Erschütterungen und Stöße besser auf als eine herkömmliche ebene Anlaufscheibe.

Trotz anderer Form kann die neue Anlaufscheibe 20 mit gleichem Kostenaufwand wie eine herkömmliche Anlaufscheibe hergestellt werden. Sie ist aber in Hinsicht auf Schmierstoffversorgung, Reibung und Stoßdämpfung wesentlich verbessert.

## Patentansprüche

1. Wellenlagerung mit einem Gleitlager, insbesondere einem Sintergleitlager, in dessen Lagerbohrung eine Welle mit Lagerspiel geführt ist, wobei sich im Lagerspiel ein Ölfilm ausbildet und zumindest an einer Stirnseite des Lagers eine mit der Welle drehfest verbundene Anlaufscheibe in Berührungskontakt mit der Stirnseite des Lagers steht,
**dadurch gekennzeichnet,**
**dass** die Anlaufscheibe (20) in Umfangsrichtung abwechselnd mit radial von ihrer Wellenbohrung (21) ausgehenden Wellenbergen (22) und Wellentäler (23) versehen ist und mit den Wellenbergen (22) auf der zugekehrten Stirnseite (13) des Lagers (12) gleitet.

2. Wellenlagerung nach Anspruch 1,
**dadurch gekennzeichnet,**
**dass** die Wellenbohrung (21) als Lagerhülse ausgebildet ist, die von einer stirnseitigen Ausnehmung (14) des Lagers (12) aufgenommen ist.

3. Wellenlagerung nach Anspruch 1 oder 2,
**dadurch gekennzeichnet,**
**dass** die Anlaufscheibe (20) umfangsseitig durch die stirnseitige Ausnehmung (14) des Lagers (12) überdeckt ist.

4. Wellenlagerung nach einem der Ansprüche 1 bis 3,
**dadurch gekennzeichnet,**
**dass** die Wellenberge (22) im Bereich ihrer Berührungskontakte mit der Stirnseite (13) des Lagers (10) glatt poliert sind.

5. Wellenlagerung nach einem der Ansprüche 1 bis 4,
**dadurch gekennzeichnet,**
**dass** die Anlaufscheibe (21) auf der der Stirnseite (13) des. Lagers (10) zugekehrten Seite im Bereich der Wellentäler (23) und der anschließenden Wellenflanken mit Riefen (26) versehen ist, die vom Talgrund (23g) der Wellentäler (23) ausgehen und sich zum Umfang der Anlaufscheibe (21) geneigt über die Wellenflanken erstrecken.

6. Wellenlagerung nach Anspruch 5,
**dadurch gekennzeichnet,**
**dass** sich die Riefen (26) im Bereich des Talgrundes (23g) der Wellentäler (23) teilweise überlappen und mit ihren entgegen gesetzt geneigten Anfangsabschnitten (26a) im Winkel von etwa 30° zum Umfang der Anlaufscheibe (20) stehen und mit Endabschnitten (26e) in demselben Winkel zum Umfang der Anlaufscheibe (20) vor Erreichen der Wellenrücken (22r) enden, während die Riefen (26) zwischen den Anfangs- und Endabschnitten (26a und 26e) mit Mittelabschnitten (26m) im Winkel von etwa 80° zum Umfang der Anlaufscheibe (20) verlaufen.

7. Wellenlagerung nach Anspruch 5 oder 6,
**dadurch gekennzeichnet,**
**dass** die Riefen (26) V-förmigen Querschnitt aufweisen und dass deren Breite und Tiefe in den Endabschnitten (26e) gegen Null gehen.

8. Wellenlagerung nach einem der Ansprüche 5 bis 7,
**dadurch gekennzeichnet,**
**dass** die an die Kanten der Riefen (26) anschließenden Oberflächenbereiche der Anlaufscheibe (20) eine granulierte Oberflächenstruktur mit einer Granulatgröße < 0,2 mm aufweisen.

9. Wellenlagerung nach einem der Ansprüche 5 bis 8,
**dadurch gekennzeichnet,**
**dass** die Mittelabschnitte (26m) der Riefen (26) mit abzweigenden Teilriefen (26t) versehen sind.
